# EUROPÄISCHE PATENTANMELDUNG

(11) **EP 4 660 574 A1**
(43) Veröffentlichungstag der Anmeldung: **10.12.2025**
(21) Anmeldenummer: 24179639.0
(22) Anmeldetag: 03.06.2024
(51) Int. Cl.: G01B 11/25, G01B 11/30, G01N 21/88, G06V 10/145, G06V 10/774, G01N 21/25, G01N 21/47, G01N 21/55

(54) **VERFAHREN ZUR GENERIERUNG SYNTHETISCHER DATEN VON OBJEKTEN, VORZUGSWEISE VON PRODUKTEN**

(71) Anmelder: Gottfried Wilhelm Leibniz Universität Hannover, 30167 Hannover (DE)
(72) Erfinder: Melchert, Nils, 30451 Hannover (DE); Middendorf, Philipp, 30655 Hannover (DE); Hedrich, Kolja, 30167 Hannover (DE); Reithmeier, Eduard, 30179 Hannover (DE)
(74) Vertreter: Holz, Christian

(57) **Zusammenfassung**

Die vorliegende Erfindung betrifft ein Verfahren zur Generierung synthetischer Daten von Objekten (2), vorzugsweise von Produkten (2), mit wenigstens den Schritten:
• Positionieren (000) eines Objekts (2),
• Projizieren (100) eines strukturierten Projektionsmusters, vorzugsweise einer Streifenprojektion, vorzugsweise mehrerer unterschiedlicher strukturierter Projektionsmuster, vorzugsweise Streifenprojektionen, nacheinander, auf das Objekt (2),
• vorzugsweise jeweils, erstes optisches Erfassen (120) des Objekts (2) samt strukturiertem Projektionsmuster,
• Bestimmen (140) der dreidimensionalen Geometrie des Objekts (2) basierend auf dem optisch erfassten strukturierten Projektionsmuster,
• bei unveränderter Anordnung des Objekts (2), zweites optisches Erfassen (220) des Objekts (2) aus derselben Perspektive wie beim ersten optischen Erfassen (120),
• Bestimmen (240) der Oberflächeneigenschaften des Objekts (2) basierend auf den optisch erfassten Bilddaten des zweiten optischen Erfassens (220),
• Zuordnen (300) der bestimmten dreidimensionalen Geometrie des Objekts (2) und der bestimmten Oberflächeneigenschaften des Objekts (2) und
• Generieren (500) synthetischer Daten des Objekts (2) basierend auf den zugeordneten Daten.

## Beschreibung

Die vorliegende Erfindung betrifft ein Verfahren zur Generierung synthetischer Daten von Objekten, vorzugsweise von Produkten, computerlesbare Daten, welche mittels eines derartigen Verfahrens generiert wurden, einen computerlesbaren Datenträger, auf welchem derartige computerlesbare Daten gespeichert sind, sowie eine Messvorrichtung zur Generierung synthetischer Daten von Objekten mittels eines derartigen Verfahrens.

Es ist heutzutage im Rahmen der Produktion von Waren üblich, die produzierten Waren hinsichtlich ihrer Qualität zu überprüfen. Unter Waren bzw. Produkten sind dabei neben Endprodukten auch Zwischenprodukte und Halbzeuge bzw. Bauteile, Baugruppen und dergleichen, insbesondere Bauteile im industriellen Kontext, zu verstehen. Je nach Art der Produkte kann eine Überprüfung der gewünschten Funktion, insbesondere bei Endprodukten bzw. Baugruppen, oder sonstiger Qualitätskriterien wie beispielsweise die Oberflächenbeschaffenheit, die Maßhaltigkeit und dergleichen erfolgen, welche üblicherweise optisch erfasst und überprüft werden. In jedem Fall stellt die Qualitätsprüfung einen Vergleich zwischen Vorgaben bzw. Solldaten, welche das Produkt idealerweise genau bzw. innerhalb akzeptabler Toleranzen zu erfüllen hat, und den tatsächlichen entsprechenden Eigenschaften des Produkts dar.

Erfolgt die Qualitätsprüfung bisher eher durch Personen, ggfs. unter Zuhilfenahme von Messmitteln und dergleichen, so wird im produzierenden Gewerbe häufig ein vollautomatischer Produktionsprozess angestrebt, der auch automatisierte Lösungen zur Qualitätssicherung, zu welcher die Qualitätsprüfung gehört, erfordert. Um dies zu gewährleisten, können optische Inspektionssysteme zur automatisierten Qualitätsprüfung bzw. zur automatisierten Qualitätssicherung eingesetzt werden. Insbesondere die optische Prüftechnik mit 2D-Bildsensoren bietet hier verschiedene Potenziale wie etwa schnelle Analysen bei hoher Genauigkeit und kostengünstiger Hardware.

Nachteilig hieran ist jedoch, dass die Entwicklung und Implementierung der notwendigen Algorithmen meist aufwändig ist und ein hohes Maß an Expertenwissen erfordert, d.h. entsprechend qualifizierte Personen erforderlich sind, um die Algorithmen an die Aufgabenstellung anzupassen, d.h. zur Beurteilung der Qualität des Produkts hinsichtlich der relevanten Produkteigenschaften als Qualitätskriterien zu befähigen. Dies gilt insbesondere für die Entwicklung von Algorithmen des maschinellen Lernens (ML).

Trotzdem bieten genau ML-basierte Verfahren viele Möglichkeiten zur effizienten Lösung verschiedener Anwendungsfälle in der Qualitätssicherung. Dies umfasst unter anderem die Anwesenheitsprüfung von Bauteilen oder Baugruppen, die Klassifikation und die Detektion von Objekten, die Lokalisation im 2D- oder 3D-Raum und die Detektion und Segmentierung von verschiedenen Schadensmustern.

Die Vorgehensweise und die Voraussetzungen für die Implementierung und das Training der einzelnen Methoden sind sehr ähnlich. Die typische Anwendungsmethode, das überwachte Lernen, erfordert jedoch umfangreiche annotierte Bilddaten, wobei die Art der Annotation je nach Zielanwendung variiert. Hieraus ergibt sich die erhebliche Problematik der Datenerhebung, die sich aus Datenaufnahme und Annotation zusammensetzt. Diese stellt einen zeitaufwändigen Kostenpunkt dar, da unter Umständen zunächst aufwendige Vorarbeiten zur Durchführung der Bildaufnahme erfolgen müssen. Anschließend sind das Wissen und die Beteiligung von Experten erforderlich, um die Annotation der aufgenommenen Bilder durchzuführen. Die erforderlichen umfangreichen annotierten Bilddaten verursachen somit einen hohen Aufwand, ein ML-basiertes Verfahren für den jeweiligen Anwendungsfall eines konkreten Produktes zu erstellen bzw. anzulernen.

Ferner ist ein allgemein vorherrschendes Problem beim Anlernen von Algorithmen bspw. zur Klassifikation das mögliche Auftreten von Klassenungleichgewichten. Dies tritt auf, wenn die Bildaufnahme des Datensatzes einzelne Klassen nicht oder nur gering repräsentiert. Dies ist nach der Aufnahme des Datensatzes nur schwer zu kompensieren und kann bei Verwendung von realen Daten nur mit zeit- und kostenintensivem Aufwand korrigiert werden.

Darüber hinaus existieren auch Anwendungen, bei denen eine Repräsentation der benötigten Klassen mit der zeitlich begrenzten Aufnahme eines Datensatzes nicht möglich ist. Mit Methoden aus dem Bereich des maschinellen Lernens gibt es derzeit keine Möglichkeit, das Auftreten von neuen bzw. unbekannten Klassen zu erkennen und diese zu klassifizieren.

Eine weitere Problematik ergibt sich bei der Adaption von Algorithmen des maschinellen Lernens an langfristig variierende Einflüsse. Im Falle des überwachten Lernens werden solche Algorithmen nach der Trainingsphase "eingefroren", was bedeutet, dass die Algorithmen in der späteren Anwendung deterministisch sind und ein konsistentes Verhalten aufweisen. Daher kann die Genauigkeit dieser Verfahren bei Änderung der Prozessparameter (wie Lichtverhältnisse, Objektgeometrie, Umgebungsszene) deutlich abnehmen. Die einzig mögliche Lösung besteht darin, die Algorithmen auf die zu erwartenden Einflüsse vorzubereiten oder den Lernvorgang inklusive aufwendiger Datenakquisition mit den aktuellen Parametern erneut durchzuführen.

Insgesamt bedingen all diese Herausforderungen ein hohes Maß an Expertenwissen und Arbeitskosten bei der Implementierung und Wartung von Algorithmen des maschinellen Lernens. Dies führt zu entsprechenden zeitlichen Verzögerungen in der Umsetzung bzw. Nutzung dieser Algorithmen sowie zu entsprechend hohen Kosten, welche die Herstellungskosten der Produkte erhöhen.

Die DE 10 2022 004 206 A1 beschreibt ein Verfahren und System zur Implementierung einer Qualitätskontrolle beinhaltend ein industrielles Bildverarbeitungssystem bzw. maschinelles Sehsystem zum Aufnehmen von Bildern von Instanzen eines Produkts, und ein Computersystem einschließlich Computerspeicher, der maschinenlesbare Anweisungen enthält, die von einem Computerprozessor ausführbar sind. Der Prozessor wertet die Qualitätskontrollbilder auf eine Mehrzahl potenzieller Qualitätsfehler in dem Produkt hin aus und erzeugt eine Fehlerwarnung, die mit einem aufgenommenen Bild verknüpft ist, bei dem zumindest ein potenzieller Qualitätsfehler identifiziert wird. Informationen über jede Fehlerwarnung werden in einer Datenbankprotokolldatei in dem Computerspeicher gespeichert. Ein Neuronales-Netz-Maschinenlernalgorithmus verarbeitet die Datenbankprotokolldatei, indem er in einer Lernphase eine vom Menschen initiierte Eingabe des Akzeptierens oder Ablehnens jeder Fehlerwarnung empfängt und die vom Menschen initiierte Eingabe in der Protokolldatei speichert, und in einer automatisierten Phase automatisch zumindest einige Fehlerwarnungen akzeptiert oder ablehnt, ohne den Schritt des Empfangens einer von Menschen initiierten Eingabe durchzuführen.

Der grundlegende Lösungsansatz für die dargestellte Problemstellung ist die Generierung und Verwendung synthetischer Daten auf Basis bekannter oder identifizierter Informationen aus der Realität zum effizienten und robusten Trainieren von Algorithmen des maschinellen Lernens. Dieser Grundgedanke wurde bereits in verschiedenen wissenschaftlichen Veröffentlichungen untersucht und weiterverfolgt.

Die Grundidee der Nutzung von synthetischen Daten, die mit Hilfe von Rendering-Software erzeugt werden, ist bereits in vielfältiger Weise umgesetzt worden, siehe beispielsweise "Boikov, Aleksei, et al. "Synthetic data generation for steel defect detection and classification using deep learning." Symmetry 13.7 (2021): 1176", "Vidal, Joel, et al. "Brickognize: Applying Photo-Realistic Image Synthesis for Lego Bricks Recognition with Limited Data." Sensors 23.4 (2023): 1898", und "Mayershofer, Christopher, Tao Ge, and Johannes Fottner. "Towards fully-synthetic training for industrial applications." LISS 2020: Proceedings of the 10th International Conference on Logistics, Informatics and Service Sciences. Springer Singapore, 2021". Der Schwerpunkt lag in diesen Fällen meist auf der Objekt- oder Schadensdetektion. Die Objektgeometrien sowie die Oberflächeneigenschaften stammen dabei aus bereits bekannten Geometrien oder aus allgemein verfügbaren Datenbanken. Alle weiteren Parameter wie Kameraposition oder Beleuchtungskonfiguration wurden zudem meist zufällig gewählt.

Ein Ansatz zur Optimierung solcher Parameter wurde von Tang et al. vorgestellt, "Tang, Hui, and Kui Jia. "A New Benchmark: On the Utility of Synthetic Data with Blender for Bare Supervised Learning and Downstream Domain Adaptation." Proceedings of the IEEE/CVF Conference on Computer Vision and Pattern Recognition. 2023". Hier wurden Optimierungsverfahren zur Anpassung und Verteilung solcher Parameter dargelegt. Weiterhin wurden Methoden zur Verwendung von synthetischen Daten mit zusätzlichen wenigen realen Daten gezeigt.

Die US 11 675 817 B1 beschreibt Verfahren, Vorrichtungen und Computerprogrammprodukte für die Erzeugung synthetischer Daten und die Auswahl dynamischer Verarbeitungsmodelle. Ein Beispielverfahren umfasst den Empfang einer Anforderung zur Erzeugung synthetischer Daten, wobei die Anforderung zur Erzeugung synthetischer Daten einen oder mehrere Konfigurationsdatenparameter enthält. Das Verfahren umfasst ferner die Auswahl mindestens eines Verarbeitungsmodells aus einer Vielzahl von Verarbeitungsmodellen auf der Grundlage des einen oder der mehreren Konfigurationsdatenparameter. Das Verfahren umfasst auch die Erzeugung eines oder mehrerer synthetischer Datensätze, die einen oder mehrere synthetische Datenwerte über das ausgewählte mindestens eine Verarbeitungsmodell enthalten. Das Verfahren umfasst ferner die Bereitstellung des einen oder der mehreren erzeugten synthetischen Datensätze für einen Benutzer über eine Benutzerschnittstelle.

Die WO 2023 / 277 907 A1 beschreibt ein elektronisches Beispielgerät enthaltend einen Prozessor und einen Speicher, der ausführbare Anweisungen speichert, die, wenn sie ausgeführt werden, den Prozessor veranlassen, ein dreidimensionales (3D) computergestütztes Designmodell (CAD) eines Objekts zu empfangen. Die Anweisungen veranlassen den Prozessor außerdem, mehrere synthetische Bilder des Objekts aus dem 3D-CAD-Modell zu erzeugen, die auf einer 3D-Szene und zufällig ausgewählten visuellen Parametern basieren. Die Anweisungen veranlassen den Prozessor ferner, unter Verwendung des 3D-CAD-Modells Anmerkungen für die mehreren synthetischen Bilder zu erzeugen.

Das Einmessen von Zielobjekten zur Ermittlung von 3D-Geometrien und anschließender Generierung von realitätsnäheren synthetischen Daten wurde durch Wong et al. gezeigt, siehe "Wong, Matthew Z., et al. "Synthetic dataset generation for object-to-model deep learning in industrial applications." PeerJ Computer Science 5 (2019): e222.". In diesem Fall wurde aus der gemessenen 3D-Geometrie und den RGB-Bildern zur Beschreibung der Oberfläche ein digitales Abbild des Zielobjekts erstellt. Grundlegende Oberflächeneigenschaften wie Spekularität oder Rauheit wurden jedoch nicht berücksichtigt. Mit diesem Abbild wurden Zufallsszenen erzeugt und Bilddaten generiert, um ML-Algorithmen zu trainieren.

Somit ist es bekannt, ein Produkt oder dergleichen, dessen Qualität automatisiert beurteilt werden soll, als reales Objekt optisch zu erfassen und aus den optisch erfassten Daten des realen Objekts ein virtuelles Ebenbild des realen Objekts zu erzeugen. Dieses virtuelle Objekt kann dann im virtuellen Raum dazu verwendet werden, ML-Algorithmen auf die Erkennung sowie Beurteilung des realen Objekts zu trainieren, indem Beschädigungen und dergleichen am virtuellen Objekt simuliert und die ML-Algorithmen darauf trainiert werden, diese Beschädigungen zu erkennen sowie korrekt zu klassifizieren. Hierdurch kann vermieden werden, diese Beschädigungen am realen Objekt vorzunehmen und die ML-Algorithmen dort auf das Erkennen und Klassifizieren der Beschädigungen zu trainieren. Am virtuellen Objekt kann das Erkennen und Klassifizieren von Beschädigungen und dergleichen des realen Objekts schneller und insbesondere flexibler mittels der ML-Algorithmen trainiert werden als dies am realen Objekt möglich ist.

Nachteilig ist jedoch, dass bisher die virtuellen Objekte nur unzureichend dem realen Objekt, insbesondere hinsichtlich der zu trainierenden Beschädigungen und dergleichen, entsprechen, was die Qualität der trainierten ML-Algorithmen begrenzt.

Eine Aufgabe der vorliegenden Erfindung ist es, die Generierung synthetischer Daten von Objekten, insbesondere von Produkten, insbesondere zum Trainieren von Algorithmen des maschinellen Lernens, zu verbessern. Insbesondere soll ein Verfahren und bzw. oder eine Vorrichtung zur Erfassung eines realen Objekts und hierauf basierend zur Erzeugung eines virtuellen Objekts zum Trainieren von ML-Algorithmen bereitgestellt werden, so dass die Qualität der trainierten ML-Algorithmen gegenüber den bekannten Möglichkeiten verbessert werden kann. Insbesondere soll die Erfassung des realen Objekts verbessert werden. Die trainierten Algorithmen sollen insbesondere zur optischen Inspektion dieser Objekte als Produkte in der Produktion eingesetzt werden können. Zumindest soll eine Alternative zu den bekannten Möglichkeiten geschaffen werden.

Die Aufgabe wird erfindungsgemäß durch ein Verfahren mit den Merkmalen des Patentanspruchs 1, durch computerlesbare Daten mit den Merkmalen des Patentanspruchs 13, durch ein computerlesbaren Datenträger mit den Merkmalen des Patentanspruchs 14 sowie durch eine Messvorrichtung mit den Merkmalen des Patentanspruchs 15 gelöst. Vorteilhafte Weiterbildungen sind in den Unteransprüchen beschrieben.

Somit betrifft die vorliegende Erfindung ein Verfahren zur Generierung synthetischer Daten von Objekten, vorzugsweise von Produkten, mit wenigstens den Schritten:
- Positionieren eines Objekts,
- Projizieren eines strukturierten Projektionsmusters, vorzugsweise einer Streifenprojektion, vorzugsweise mehrerer unterschiedlicher strukturierter Projektionsmuster, vorzugsweise Streifenprojektionen, nacheinander, auf das Objekt,
- vorzugsweise jeweils, erstes optisches Erfassen des Objekts samt strukturiertem Projektionsmuster,
- Bestimmen der dreidimensionalen Geometrie des Objekts basierend auf dem optisch erfassten strukturierten Projektionsmuster,
- bei unveränderter Anordnung des Objekts, zweites optisches Erfassen des Objekts aus derselben Perspektive wie beim ersten optischen Erfassen,
- Bestimmen der Oberflächeneigenschaften des Objekts basierend auf den optisch erfassten Bilddaten des zweiten optischen Erfassens,
- Zuordnen der bestimmten dreidimensionalen Geometrie des Objekts und der bestimmten Oberflächeneigenschaften des Objekts und
- Generieren synthetischer Daten des Objekts basierend auf den zugeordneten Daten.

Mit anderen Worten erfolgt erfindungsgemäß eine wenigstens zweifache optische Erfassung eines realen Objekts bzw. eines realen Körpers wie insbesondere eines Produkts, indem dasselbe Objekt nacheinander zuerst mittels einer ersten optischen Erfassung der Oberflächenform des Objekts samt strukturierten Projektionsmuster berührungslos digitalisiert sowie dreidimensional dargestellt und anschließend mittels einer zweiten optischen Erfassung ohne strukturiertem Projektionsmuster hinsichtlich seiner Oberflächeneigenschaften digitalisiert sowie dreidimensional dargestellt wird. Unter den Oberflächeneigenschaften des Objekts sind vorzugsweise dessen Reflexionseigenschaften und Transmissionseigenschaften zu verstehen. In jedem Fall werden die Oberflächeneigenschaften des Objekts ortabhängig bestimmt.

Dann werden beide erfasste Daten bzw. Darstellungen einander zugeordnet und aufgrund der zwischenzeitlich unveränderten Anordnung von Bilderfassungseinheit und Objekt genau so übereinandergelegt, dass die Oberflächeneigenschaften des Objekts der dreidimensionalen Geometrie des Objekts geometrisch passend zugeordnet werden können. Unter Berücksichtigung nicht nur der, vorzugsweise kartesischen, Raumrichtungen sondern auch deren Winkeln bzw. Orientierungen kann auch von einer sechsdimensionalen Geometrie des Objekts bzw. des Modells gesprochen werden.

Hierdurch können synthetische Daten des Objekts generiert werden, welche exakte Informationen zu Rauheit, Spekularität beziehungsweise Reflexion der Oberfläche des Objekts umfassen. Dies ist mittels des erfindungsgemäßen Verfahrens bzw. mittels der hierzu verwendbaren entsprechenden Messvorrichtung, wie weiter unten beschrieben, möglich, indem eine ortsabhängige (d.h. pixelweise gemessene) Identifikation der Parameter des Oberflächenmodells, d.h. von dessen Oberflächeneigenschaften, sowie das Einmessen vergleichsweise präziser Eigenschaften für Spekularität, Rauheit und dergleichen ermöglicht werden. Dadurch kann eine exakte Oberflächenbeschreibung ermöglicht werden, welche insbesondere bei Objekten mit unterschiedlichen Oberflächentypen relevant sein kann, z.B. bei Gussteilen mit rauer Oberfläche, in die Funktionsflächen mit glatter und hochreflektierender Oberfläche eingebettet sind.

Als strukturiertes Projektionsmuster kann vorzugsweise eine Streifenprojektion verwendet werden, um die Erfassung der Oberflächenform des Objekts zu erleichtern bzw. zu verbessern.

Vorzugsweise erfolgt dabei das erste optische Erfassen als Vorgang mehrerer optischer Erfassungen als gleichartige Einzelschritte des Vorgangs, so dass jedes derartige optische Erfassen eines strukturierten Projektionsmusters als Einzelschritt des ersten optischen Erfassens angesehen werden kann. Dabei werden mehrfach hintereinander unterschiedliche strukturierte Projektionsmuster verwendet und jeweils optisch erfasst sowie deren Daten als optische erfasste strukturierte Projektionsmuster dann gemeinsam zum Bestimmen der dreidimensionalen Geometrie des Objekts verwendet. Dies kann die Genauigkeit bzw. die Qualität der bestimmten dreidimensionalen Geometrie des Objekts verbessern.

Gemäß einem Aspekt der Erfindung erfolgt das Projizieren des strukturierten Projektionsmusters aus einem definierten Triangulationswinkel gegenüber dem ersten optischen Erfassen des Objekts. Dies kann die geometrisch korrekte Zuordnung von Oberflächenform und Oberflächeneigenschaften verbessern bzw. sicherstellen.

Gemäß einem weiteren Aspekt der Erfindung erfolgt das zweite optische Erfassen des Objekts bei einem Ausleuchten des Objekts, vorzugsweise aus wenigstens zwei unterschiedlichen Raumrichtungen und bzw. oder mit mehreren unterschiedlichen Ausleuchtkonfigurationen nacheinander. Die Ausleuchtung des Objekts kann die Qualität der optisch erfassten Daten der Oberflächeneigenschaften verbessern. Dabei das Objekt vorzugsweise aus verschiedenen Raumrichtungen, sozusagen punktuell, sukzessive zu beleuchten, kann es verbessern, die Oberflächeneigenschaften zu charakterisieren. Somit kann pro optisch erfasstem Bild das Licht aus einer definierten aber unterschiedlichen Raumrichtung kommen, was als jeweils unterschiedliche "punktuelle" Beleuchtungen angesehen werden kann.

Dies gilt ebenso in dem Fall, dass das Ausleuchten des Objekts zusätzlich oder alternativ vorzugsweise nacheinander mittels mehrerer unterschiedlicher Ausleuchtkonfigurationen bzw. Beleuchtungskonfigurationen erfolgt, d.h. mit verschiedenen Lichtquellen, welche unterschiedlich zum Objekt hin ausgerichtet sind, so dass die Ausleuchtung des Objekts jeweils unterschiedlich ist. Pro Konfiguration der Ausleuchtung erfolgt ein zweites optisches Erfassen, was in diesem Fall als Vorgang mehrerer gleichartiger Einzelschritte des Vorgangs angesehen werden kann, vergleichbar dem zuvor beschriebenen Vorgang des ersten optischen Erfassens in mehreren Einzelschritten. Dies kann es verbessern, die Reflexionseigenschaften der Oberfläche des Objekts zu identifizieren und somit physikalisch zu beschreiben, wie sich das Objekt bei unterschiedlichen Beleuchtungsrichtungen verhält.

Das mehrfache unterschiedliche Ausleuchten und optische Erfassen als Vorgang des zweiten optischen Erfassens kann zusätzlich oder alternativ zum Vorgang des ersten optischen Erfassens in mehreren Einzelschritten erfolgen.

Gemäß einem weiteren Aspekt der Erfindung erfolgt das Bestimmen der Oberflächeneigenschaften des Objekts basierend auf einer bidirektionalen Reflektanzverteilungsfunktion. Hierdurch können bei der Generierung der synthetischen Daten die Oberflächeneigenschaften des Objekts mittels dieser Funktion bei variierenden Lichteinflüssen und Betrachtungswinkeln realistisch dargestellt werden.

Dabei die Parameter der bidirektionalen Reflektanzverteilungsfunktion vorzugsweise auf der bestimmten dreidimensionalen Geometrie des Objekts beruhen zu lassen, ist vorteilhaft, um die Information der bestimmten dreidimensionalen Geometrie des Objekts auch dort zu verwenden und so die Qualität der generierten synthetischen Daten des Objekts hinsichtlich seiner Oberflächeneigenschaften weiter zu verbessern. Somit können auf der Geometrie des Objekts örtlich aufgelöst unterschiedliche Parameter identifiziert werden. Insbesondere können auf diese Art und Weise die Parameter der Funktion sozusagen "pixelweise" bzw. ortsabhängig bestimmt werden.

Gemäß einem weiteren Aspekt der Erfindung weist das Verfahren den weiteren Schritt nach dem Zuordnen und vor dem Generieren auf:
- Erhalten wenigstens einer Anforderung an die zu generierenden synthetischen Daten des Objekts von einem Benutzer,
wobei die Anforderung wenigstens aufweist:
- eine zu lösende Aufgabe, vorzugsweise eine Anwesenheitsprüfung des Objekts, eine Lokalisation des Objekts im 2D-Raum oder eine Detektion und Segmentierung des Objekts oder eines Teilbereichs des Objekts, und bzw. oder
- eine Angabe von Randparametern, vorzugsweise von Eigenschaften, vorzugsweise von Kamera- und Objektiveigenschaften, einer Bilderfassungseinheit des optischen Erfassens, vorzugsweise und bzw. oder der Art einer Lichtquellen eines Ausleuchten.

Dies kann den Umfang an Informationen, welche dem Generieren synthetischer Daten des Objekts zugrunde gelegt werden, weiter erhöhen, um die Genauigkeit der generierten Daten des Objekts gegenüber dem realen Objekt zu erhöhen.

Gemäß einem weiteren Aspekt der Erfindung weist das Verfahren wenigstens den weiteren Schritt auf:
- Erstellen verschiedener virtueller Szenen, welche wenigstens die generierten synthetischen Daten des Objekts erhalten.

Hierdurch können unterschiedliche virtuelle Szenen bzw. Situationen geschaffen werden, um dort bzw. anhand dieser Szenen einen Algorithmus des maschinellen Lernens auf diese Szenen bzw. Situationen zu trainieren. Hierdurch kann auf die Realisierung dieser Szenen bzw. Situationen in der Realität verzichtet werden, was Zeit und Aufwand sparen kann. Auch kann hierdurch der Umfang von nutzbaren Szenen bzw. Situationen um solche erhöht bzw. erweitert werden, welche in der Realität gar nicht bzw. nur mit unverhältnismäßigem Aufwand möglich wären.

Dabei das Erstellen verschiedener virtueller Szenen vorzugsweise unter Berücksichtigung einer Physik-Simulation erfolgen zu lassen, dann die Realitätstreue dieser Szenen bzw. Situationen erhöhen.

Gemäß einem weiteren Aspekt der Erfindung umfasst das Erstellen verschiedener virtueller Szenen ferner wenigstens ein weiteres erstelltes virtuelles Objekt, vorzugsweise in Umgebungs- und bzw. oder Störobjekt. Dies kann die Realitätsnähe weiter erhöhen. Auch kann dies den Umfang von nutzbaren Szenen bzw. Situationen weiter erhöhen. Dies kann die Qualität des Trainierens des Algorithmus des maschinellen Lernens verbessern.

Gemäß einem weiteren Aspekt der Erfindung umfasst das Erstellen verschiedener virtueller Szenen ferner wenigstens eine erstellte Lichtquelle, eine Bilderfassungsposition und bzw. oder Störeinflüsse, vorzugsweise eine Tiefenschärfe, eine Verdeckung von Objekten und bzw. oder Kamera- bzw. Objektiv-Eigenschaften. Dies kann die Qualität der virtuellen Szenen bzw. Situationen weiter verbessern bzw. diese die Realität besser abbilden lassen. Dies kann die Qualität des Trainierens des Algorithmus des maschinellen Lernens verbessern.

Gemäß einem weiteren Aspekt der Erfindung weist das Verfahren ferner den weiteren Schritt auf:
- Rendern von Bilddaten basierend auf den erstellten virtuellen Szenen.

Hierdurch können aus den Daten der zuvor beschriebenen virtuellen Szenen optisch darstellbare Bilddaten als Grafiken erzeugt werden, um diese weiter zu nutzen.

Gemäß einem weiteren Aspekt der Erfindung weist das Verfahren ferner den weiteren Schritt auf:
- Annotieren der gerenderten Bilddaten, vorzugsweise basierend auf der Anforderung.

Unter Annotationen sind Stichworte, Begriffsklärungen oder ausführlichen Texten zu verstehen, welche den entsprechenden Elementen in den gerenderten Bilddaten zugeordnet werden, um diese Elemente für den Algorithmus des maschinellen Lernens besser verständlich zu machen. Auch umfasst das Annotieren das Zuweisen einer Klasse für abgebildete Objekte bzw. Teilbereiche. Ferner kann eine pixelweise Klassenzuordnung erfolgen. Die Information der 2D-, 3D- bzw. 6D-Lage eines Objekts zur Kamera stellt ebenfalls eine Annotation dar. Es erfolgt somit ein Ableiten der Annotationen im Render-Prozess, so dass die Annotationen automatisiert beim Rendern der Bilddaten generiert werden können. Dies kann beispielsweise mittels Ray-Tracing erfolgen, um herauszufinden, ob ein Pixel gerade die Zielregion abbildet.

Gemäß einem weiteren Aspekt der Erfindung weist das Verfahren ferner den weiteren Schritt auf:
- Trainieren eines Algorithmus des maschinellen Lernens mittels der gerenderten Bilddaten, vorzugsweise zur optischen Inspektion des Objekts.

Dies kann die Umsetzung des Trainierens des Algorithmus des maschinellen Lernens darstellen, um hierdurch einen Algorithmus des maschinellen Lernens zu erzeugen bzw. dahin zu verbessern, dass ein reales Objekt auf die trainierten Merkmale hin automatisch beurteilt werden kann. Insbesondere soll ein reales Produkt als Objekt hinsichtlich von Mängeln automatisch im Rahmen einer Qualitätskontrolle beurteilt werden können, ohne den Algorithmus des maschinellen Lernens am realen Objekt auf das Erkennen derartiger Qualitätsmängeln trainieren zu müssen.

Gemäß einem weiteren Aspekt der Erfindung weist das Verfahren wenigstens den weiteren Schritt auf:
- Speichern des trainierten Algorithmus des maschinellen Lernens.

Hierdurch kann der auf das Objekt trainierte Algorithmus des maschinellen Lernens als Endergebnis gespeichert und dorthin übertragen werden, wo der trainierte Algorithmus des maschinellen Lernens auf die entsprechenden realen Objekte angewendet werden soll.

Die Erfindung betrifft auch computerlesbare Daten, vorzugsweise einen computerlesbaren Algorithmus, welche mittels eines Verfahrens wie zuvor beschrieben generiert, vorzugsweise trainiert, wurden. Hierdurch kann das Ergebnis des erfindungsgemäßen Verfahrens wie zuvor beschrieben als computerlesbare Daten zur Verfügung gestellt werden, um verwendet zu werden, beispielsweise in der Qualitätssicherung einer Produktion. Dabei können, je nach erfolgten Verfahrensschritten, bereits generierte synthetische Daten des Objekts das Ergebnis des Verfahrens darstellen, oder aber auch gerenderte Daten, annotierte Daten bzw. ein trainierter Algorithmus des maschinellen Lernens.

Die Erfindung betrifft ferner einen computerlesbaren Datenträger, auf welchem die computerlesbaren Daten wie zuvor beschrieben gespeichert sind. Der computerlesbare Datenträger kann insbesondere eine stationäre oder mobile Festplatte, ein Daten- bzw. USB-Stick, eine Diskette oder dergleichen sein. Insbesondere kann der Datenträger eine Festplatte einer Cloud bzw. eines Rechners, insbesondere eines Produktionsablaufs, sein. Hierdurch können die computerlesbaren Daten wie zuvor beschrieben zugänglich bzw. verfügbar gemacht werden.

Die Erfindung betrifft des Weiteren eine Messvorrichtung, vorzugsweise einen Einmessstand, zur Generierung synthetischer Daten von Objekten, vorzugsweise von Produkten, mittels eines Verfahrens wie zuvor beschrieben mit
- einer Messfläche zum Positionieren eines Objekts,
- einer Projektionseinheit, vorzugsweise einer Streifenprojektionseinheit, zum Projizieren eines strukturierten Projektionsmusters auf das Objekt,
- einer Bilderfassungseinheit zum ersten optischen Erfassen des Objekts samt strukturierten Projektionsmuster und zum zweiten optischen Erfassen des unverändert angeordneten Objekts aus derselben Perspektive wie beim ersten optischen Erfassen und
- einer Steuerungseinheit zum Bestimmen der dreidimensionalen Geometrie des Objekts basierend auf dem optisch erfassten strukturierten Projektionsmuster, zum Bestimmen der Oberflächeneigenschaften des Objekts basierend auf den optisch erfassten Bilddaten, zum Zuordnen der bestimmten dreidimensionalen Geometrie des Objekts und der bestimmten Oberflächeneigenschaften des Objekts sowie zum Generieren synthetischer Daten des Objekts basierend auf den zugeordneten Daten.

Hierdurch kann eine Messvorrichtung zur Verfügung gestellt werden, um das erfindungsgemäße Verfahren durchzuführen. Insbesondere kann hierdurch die zweifache optische Erfassung, ein Mal mit strukturiertem Projektionsmuster zur Erfassung der dreidimensionalen Geometrie des realen Objekts und ein Mal ohne strukturiertes Projektionsmuster zur Erfassung der Oberflächeneigenschaften des realen Objekts, durchgeführt werden, ohne die Lage des realen Objekts zu verändern.

Mit anderen Worten kann zur Umsetzung der vorliegenden Erfindung eine Messvorrichtung in Form eines Einmessstands inklusive Recheneinheit genutzt werden, um ein erfindungsgemäßes Verfahren umzusetzen.

Die Abgrenzung gegenüber dem Stand der Technik kann in der exakten Identifikation und Einmessung eines beispielhaften Zielobjekts zur realistischen Generierung synthetischer Bilddaten gesehen werden. Basierend auf der Hardware des Einmessstandes kann eine vollautomatisierte Software-Pipeline implementiert werden, welche nach händischer Eingabe grundlegender Einsatzbedingungen und Einlegen eines Beispielobjekts eine maßgeschneiderte ML-Algorithmik erstellen kann. Diese Algorithmik kann anschließend auf eine dedizierte Recheneinheit übertragen werden, welche abschließend als Produkt einer Person übergeben werden kann. Diese Person kann die Hardware dann "Plug-and-Play" in den vorgesehenen Inspektionsaufbau in der Produktionslinie integrieren.

Der Einmessstand kann eine Grundfläche bzw. ein Messfeld, einen verstrebten Aufbau und ein darin montiertes, vorzugsweise zweistufiges, Messsystem aufweisen. Dieses Messsystem kann wiederum drei grundlegenden Komponenten aufweisen: einen 2D-Bildsensor, eine, vorzugsweise in einem definierten Triangulationswinkel zum Bildsensor montierte, Projektionseinheit über dem Messfeld sowie wenigstens eine Punktlichquelle, vorzugsweise mehrere Punktlichtquellen, welche vorzugsweise radial verteilt auf den Messbereich ausgerichtet sind.

Das zweistufige Messsystem kann somit erfindungsgemäß zwei Messarten ermöglichen. Dies kann zum einen eine Streifenlichtprojektionsmessung (Bildsensor + Projektionseinheit) zur dreidimensionalen Erfassung der Objektgeometrie und zum anderen eine Identifikation ortsabhängiger Oberflächenflächeneigenschaften des Objekts (Bildsensor + Punktlichtquellen) sein. Da für beide Messungen derselbe Bildsensor verwendet wird, ist eine exakte Fusion durch Korrespondenz von 3D-Informationen und Bilddaten möglich.

Die zugrundeliegenden Algorithmen und Methoden zur Auswertung der Messergebnisse können bei der Projektionsmessung bzw. bei der Streifenprojektionsmessung auf etablierten bekannten Methoden beruhen. Die Identifikation der Oberflächeneigenschaften kann mittels eines mathematischen Modells, das auf klassischen BRDF-Modellen aufbauen und bzw. oder dessen Parameter unter Berücksichtigung geometrischer Informationen aus der Streifenlichtprojektionsmessung identifiziert werden können, beruhen. Eine derartige multi-modale Erfassung kann letztendlich die Erstellung eines realitätsnahen digitalen Zwillings ermöglichen. Mit diesem realitätsnahen digitalen Zwilling des realen Objekts kann die synthetische Bilddatengenerierung im Anschluss fokussiert auf den entsprechenden Anwendungsfall durchgeführt werden.

Um eine realitätsnahe Generierung der synthetischen Daten zu verbessern, kann die Eingabe verschiedener Anforderungen erfolgen. Dies kann die zu lösende Aufgabe betreffen, welche zwischen folgenden Arten differenziert werden kann: Anwesenheitsprüfung, Lokalisation im 2D-Raum, im 3D-Raum bzw. im 6D-Raum und Detektion + Segmentierung des Objekts bzw. Teilbereichen des Objekts. Weiterhin kann die Angabe von Randparametern wie den geschätzten Kamera- und Objektiveigenschaften und der Art des Beleuchtungssystems vorteilhaft sein.

Die Recheneinheit kann neben der Ansteuerung und Auswertung des Messsystems vor allem für die Generierung der synthetischen Daten sowie für das Training der ML-Algorithmen verwendet werden. Die Generierung der synthetischen Daten kann mittels Software stattfinden, so dass digital Szenen erstellt werden können, welche neben den eingemessenen Zielobjekten weitere Umgebungs- und Störobjekte beinhalten können. Zur realitätsnahen Szenen-Modellierung können weiterhin typische Lichtquellen, Kamerapositionen und bzw. oder Störeinflüsse wie Tiefenschärfe und bzw. oder Verdeckung von Objekten eingepflegt werden. Auch kann zusätzlich die Abbildung weiterer Kamera- bzw. Objektiv-Eigenschaften wie Linsenverzeichnung, Field of View und dergleichen erfolgen.

Mithilfe von Physik-Simulationen können zudem realitätsnahe Bewegungsmuster und Szenen-Konfigurationen erstellt werden. Der gesamte Szenen-Modellierungsprozess und das anschließende Rendering der Bilddaten können dabei voll-automatisiert auf der Recheneinheit stattfinden. Im Anschluss können die Bilddaten, welche entsprechend des abgezielten Anwendungsfalls automatisiert in der Simulationsumgebung annotiert wurden, für das Training einer ML-Algorithmik verwendet werden.

Dieses Training kann ebenfalls auf der dargestellten Recheneinheit stattfinden. Die ML-Algorithmik kann je nach Anwendungsfall etablierte Methoden der Forschung und des Standes der Technik aufweisen. Hinzu können verschiedene Pre- und Post-Processing-Methoden aus dem Bereich der konventionellen Bildverarbeitung zur Anwendung kommen.

Abschließend kann die fertige Algorithmik als Softwarepaket von der Recheneinheit bereitgestellt und auf die jeweilige Zielhardware zur Kommunikation innerhalb des Produktionsprozesses übertragen werden. Dabei kann es sich entweder um eine dedizierte Hardware handeln, die speziell für die jeweilige Algorithmik ausgelegt ist, oder um eine kundenspezifische Lösung.

Zusammengefasst kann ein modellbasiertes Verfahren geschaffen werden, welches mittels eines entsprechenden Einmessstands inklusive Recheneinheit umgesetzt werden kann, um die Generierung eines exakten digitalen Abbilds eines Zielobjekts zu ermöglichen, um daraufhin Szenen realistisch zu simulieren und letztendlich synthetische realitätsnahe Bilddaten zu generieren. Dies kann das Trainieren von Algorithmen des maschinellen Lernens auf Basis der synthetischen Daten und gleichzeitig den Transfer in die reale Anwendung ermöglichen.

Mehrere Ausführungsbeispiele und weitere Vorteile der Erfindung werden nachstehend im Zusammenhang mit den folgenden Figuren rein schematisch dargestellt und näher erläutert. Darin zeigt:
- Figur 1: eine seitliche schematische Darstellung einer erfindungsgemäßen Messvorrichtung gemäß eines ersten Ausführungsbeispiels;
- Figur 2: eine perspektivische Nahansicht einer erfindungsgemäßen Messvorrichtung gemäß eines zweiten Ausführungsbeispiels von schräg oben;
- Figur 3: die Darstellung der Figur 2 mit der Messvorrichtung als Ganzes; und
- Figur 4: ein Ablaufdiagramm eines erfindungsgemäßen Verfahrens.

Die o.g. Figuren werden in kartesischen Koordinaten betrachtet. Es erstreckt sich eine Längsachse X, welche auch als Tiefe X oder als Länge X bezeichnet werden kann. Senkrecht zur Längsachse X erstreckt sich eine Querachse Y, welche auch als Breite Y bezeichnet werden kann. Senkrecht sowohl zur Längsachse X als auch zur Querachse Y erstreckt sich eine vertikale Achse Z, welche auch als Höhe Z bezeichnet werden kann und der Richtung der Schwerkraft bzw. der Gravitationskraft entspricht. Die Längsachse X und die Querachse Y bilden gemeinsam die Horizontale X, Y, welche auch als horizontale Ebene X, Y bezeichnet werden kann.

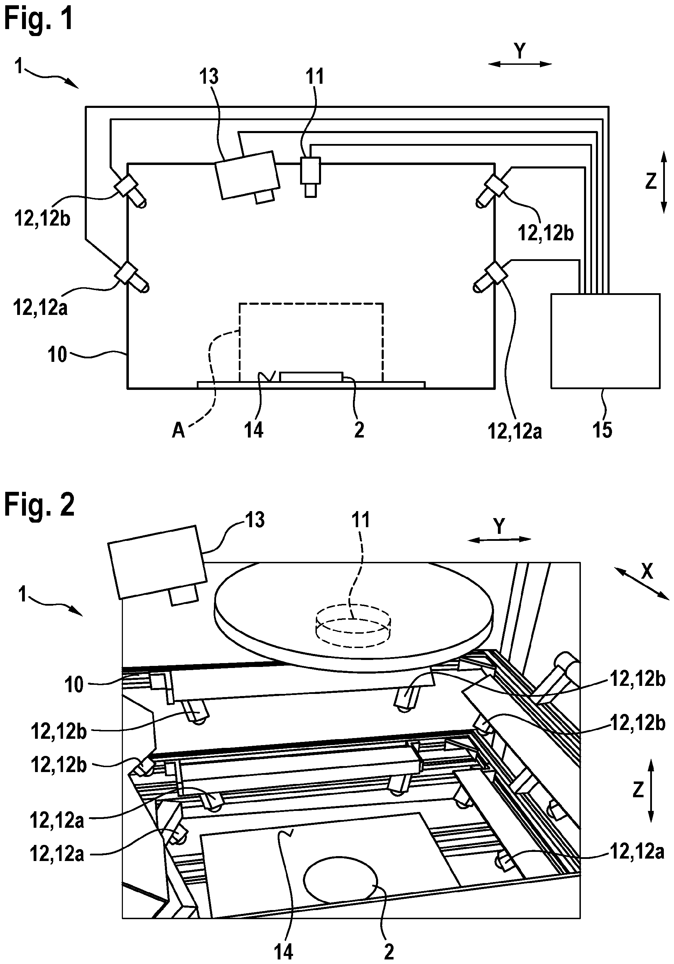

Figur 1 zeigt eine seitliche schematische Darstellung einer erfindungsgemäßen Messvorrichtung 1 gemäß eines ersten Ausführungsbeispiels. Die Messvorrichtung 1 kann auch als Einmessstand 1 bezeichnet werden.

Der Einmessstand 1 weist ein Gestell 10 auf, welches auch als Rahmen 10 bezeichnet werden kann. Das Gestell 10 ist quaderförmig aus Stangen oder dergleichen ausgebildet und trägt mehrere Komponenten des Einmessstands 1. Hierzu gehören mehrere Lichtquellen 12 als Punktlichtquellen 12, welche in das Innere des Gestells 10 und zu dessen Untergrund (nicht bezeichnet) hin ausgerichtet sind. Die Punktlichtquellen 12 sind dabei entlang der vertikalen Achse Z in zwei unterschiedlichen Höhen angeordnet, welche in untere Punktlichtquellen 12a und obere Punktlichtquellen 12b unterschieden werden können, vgl. Figur 1.

Im oberen Bereich des Gestells 10 ist sowohl entlang der Längsachse X als auch der Querachse Y mittig eine Bilderfassungseinheit 11 als 2D-Bildsensor 11 in Form einer Kamera 11 angeordnet und entlang der vertikalen Achse Z direkt bzw. geradlinig nach unten hin auf den Untergrund des Gestells 10 ausgerichtet. Schräg in einem definierten festen Winkel zur Kamera 11 sowie entlang der Querachse Y neben der Kamera 11 ist eine Streifenprojektionseinheit 13 ebenfalls im oberen Bereich des Gestells 10 angeordnet und auf den Abschnitt des Untergrunds des Gestells 10 hin ausgerichtet, welcher von der Kamera 11 erfasst wird bzw. welcher entlang der vertikalen Achse Z genau unterhalb der Kamera 11 liegt. Dieser Bereich des Untergrunds kann auch als Messfläche 14, als Grundfläche 14 oder als Messfeld 14 bezeichnet werden. Ein gewisses Volumen oberhalb und innerhalb der Messfläche 14 kann dabei als Messvolumen A angesehen werden.

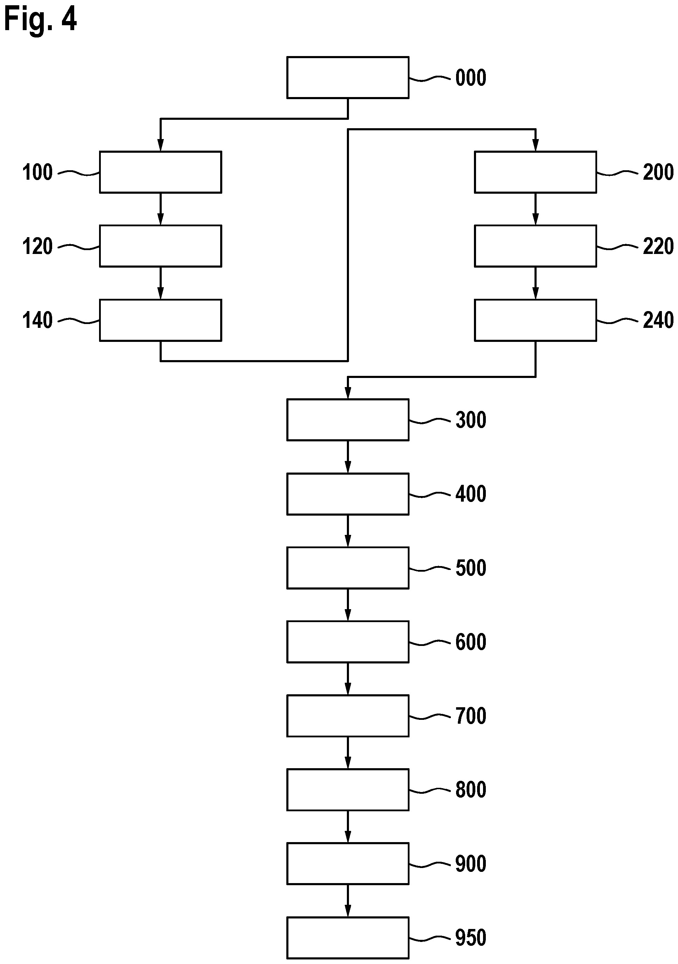

Auf der Messfläche 13 oben drauf und möglichst mittig innerhalb der Horizontalen X, Y des Messvolumens A sowie entlang der vertikalen Achse Z innerhalb des Messvolumens A kann ein Objekt 2 in Form eines Produkts 2 als Messobjekt 2 bzw. als Zielobjekt 2 angeordnet werden. Nun kann seitens einer Steuerungseinheit 15 bzw. einer Recheneinheit 15 ein erfindungsgemäßes Verfahren gemäß der Figur 4 wie folgt ausgeführt werden, indem die Steuerungseinheit 15 die Schritte selbst ausführt sowie die Komponenten des Einmessstands 1 hierzu entsprechend ansteuert:
Es erfolgt ein Positionieren 000 des Objekts 2 wie zuvor bereits erwähnt durch eine Person auf der Messfläche 13. Dann erfolgt mittels der Streifenprojektionseinheit 13 ein Projizieren 100 eines strukturierten Projektionsmusters einer Streifenprojektion auf das Objekt 2, wobei das Projizieren 100 des strukturierten Projektionsmusters aus dem bereits erwähnten definierten Triangulationswinkel gegenüber der Kamera 11 erfolgt.

Mittels der Kamera 11 erfolgt dann ein erstes optisches Erfassen 120 des Objekts 2 samt strukturierten Projektionsmuster. Seitens der Steuerungseinheit 15 erfolgt nun ein Bestimmen 140 der dreidimensionalen Geometrie des Objekts 2 basierend auf dem optisch erfassten strukturierten Projektionsmuster.

Zur Verbesserung der Genauigkeit bzw. die Qualität der bestimmten dreidimensionalen Geometrie des Objekts 2 kann der zuvor beschriebene Vorgang des Projizierens 100 eines strukturierten Projektionsmusters einer Streifenprojektion auf das Objekt 2 und dessen erstes optischen Erfassens 120 für unterschiedliche Muster von Streifenprojektionen auch mehrfach hintereinander wiederholt werden, so dass alle einzelnen Projektionen und deren optische Erfassung gemeinsam den Vorgang des ersten optischen Erfassens 120 darstellen. Die gemeinsame Verwendung dieser Daten zum Bestimmen der dreidimensionalen Geometrie des Objekts kann das Ergebnis verbessern.

Bei unveränderter Anordnung des Objekts 2 erfolgt nun ein zweites optisches Erfassen 220 des Objekts 2 aus derselben Perspektive wie beim ersten optischen Erfassen 120 bei einem Ausleuchten 200 des Objekts 2 aus unterschiedlichen Raumrichtungen mittels der Punktlichtquellen 12. Vorzugsweise werden dabei mehreren unterschiedlichen Ausleuchtkonfigurationen nacheinander verwendet, vergleichbar den zuvor beschriebenen unterschiedlichen Streifenprojektionen, so dass auch das zweite optische Erfassen 220 des Objekts 2 als Vorgang in mehreren Einzelschritten, d.h. mit dem optischen Erfassen 220 des Objekts 2 aus einer der Raumrichtungen sowie bei einer der Ausleuchtkonfigurationen erfolgt.

Es erfolgt dann ein Bestimmen 240 der Oberflächeneigenschaften des Objekts 2 basierend auf den optisch erfassten Bilddaten mittels der Steuerungseinheit 15, wobei das Bestimmen 240 der Oberflächeneigenschaften des Objekts 2 basierend auf einer bidirektionalen Reflektanzverteilungsfunktion erfolgt, wobei die Parameter der bidirektionalen Reflektanzverteilungsfunktion auf der bestimmten dreidimensionalen Geometrie des Objekts 2 beruhen.

Seitens der Steuerungseinheit 15 erfolgt dann ein Zuordnen 300 der bestimmten dreidimensionalen Geometrie des Objekts 2 und der bestimmten Oberflächeneigenschaften des Objekts 2. Es erfolgt ein Erhalten 400 wenigstens einer Anforderung an die zu generierenden synthetischen Daten des Objekts 2 von einer Person als Benutzer seitens der Steuerungseinheit 15, wobei die Anforderung wenigstens eine zu lösende Aufgabe in Form einer Anwesenheitsprüfung des Objekts 2, einer Lokalisation des Objekts 2 im 2D-Raum, im 3D-Raum oder im 6D-Raum oder einer Detektion und Segmentierung des Objekts 2 oder eines Teilbereichs des Objekts 2, und bzw. oder eine Angabe von Randparametern in Form von Eigenschaften wie Kamera- und Objektiveigenschaften, einer Bilderfassungseinheit 11 des optischen Erfassens 120, 220 und bzw. oder der Art einer Lichtquellen 12 eines Ausleuchten 200 aufweist.

In jedem Fall erfolgt nun ein Generieren 500 synthetischer Daten des Objekts 2 basierend auf den zugeordneten Daten seitens der Steuerungseinheit 15.

Ebenfalls seitens der Steuerungseinheit 15 erfolgt ein Erstellen 600 verschiedener virtueller Szenen, welche wenigstens die generierten synthetischen Daten des Objekts 2 erhalten, wobei das Erstellen 600 verschiedener virtueller Szenen unter Berücksichtigung einer Physik-Simulation sowie ferner wenigstens ein weiteres erstelltes virtuelles Objekt in Form eines Umgebungs- und bzw. oder Störobjekts und bzw. oder wenigstens eine erstellte Lichtquelle, eine Bilderfassungsposition und bzw. oder Störeinflüsse wie eine Tiefenschärfe, eine Verdeckung von Objekten und bzw. oder Kamera- bzw. Objektiv-Eigenschaften umfasst.

Nun erfolgt seitens der Steuerungseinheit 15 ein Rendern 700 von Bilddaten basierend auf den erstellten virtuellen Szenen, dann ein Annotieren 800 der gerenderten Bilddaten basierend auf der Anforderung bzw. ein Ableiten der Annotationen im Render-Prozess sowie ein Trainieren 900 eines Algorithmus des maschinellen Lernens mittels der gerenderten Bilddaten zur optischen Inspektion des Objekts 2. Abschließend erfolgt ein Speichern 950 des trainierten Algorithmus des maschinellen Lernens als computerlesbare Daten bzw. als computerlesbarer Algorithmus auf einen computerlesbaren Datenträger.

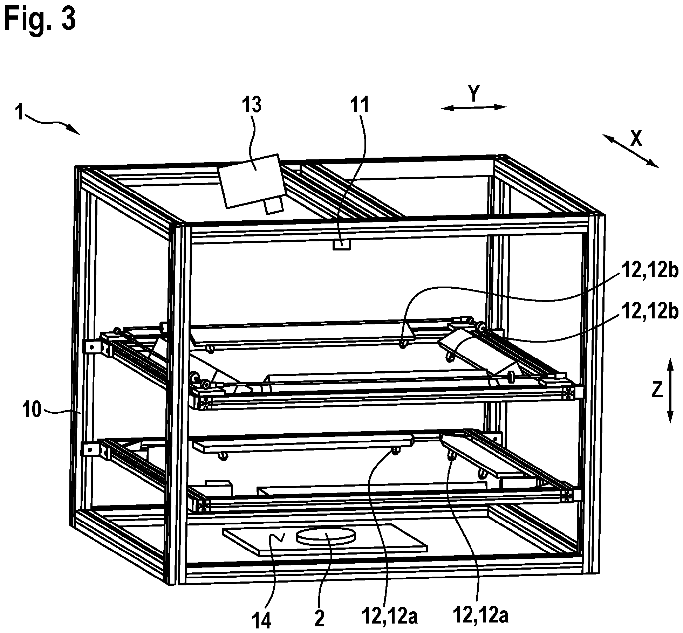

Figur 2 zeigt eine perspektivische Nahansicht einer erfindungsgemäßen Messvorrichtung 1 gemäß eines zweiten Ausführungsbeispiels von schräg oben. Figur 3 zeigt die Darstellung der Figur 2 mit der Messvorrichtung 1 als Ganzes.

In diesem Fall sind die Lichtquellen 12, d.h. die unteren Lichtquellen 12a sowie die oberen Lichtquellen 12b, in der Horizontalen X, Y sich länglich erstreckend sowie zur Messfläche 13 hin ausgerichtet angeordnet, um eine gleichmäßigere Ausleuchtung zu ermöglichen. Die Lichtquellen 12 bilden dabei pro Ebene eine achteckige und fast durchgehende Anordnung.

### BEZUGSZEICHENLISTE (Teil der Beschreibung)

- A: Messvolumen
- X: Längsachse; Tiefe; Länge
- Y: Querachse; Breite
- Z: vertikale Achse; Höhe
- X, Y: Horizontale; horizontale Ebene

- 1: Messvorrichtung; Einmessstand
- 10: Gestell; Rahmen
- 11: Bilderfassungseinheit; 2D-Bildsensor; Kamera
- 12: (Punkt-)Lichtquellen
- 12a: untere (Punkt-)Lichtquellen
- 12b: obere (Punkt-)Lichtquellen
- 13: (Streifen-)Projektionseinheit
- 14: Messfläche; Grundfläche; Messfeld
- 15: Steuerungseinheit; Recheneinheit
- 2: Objekt; Messobjekt; Zielobjekt; Produkt

- 000: Positionieren eines Objekts 2
- 100: Projizieren eines strukturierten Projektionsmusters auf das Objekt 2
- 120: erstes optisches Erfassen des Objekts 2 samt strukturiertem Projektionsmuster
- 140: Bestimmen der dreidimensionalen Geometrie des Objekts 2
- 200: Ausleuchten des Objekts 2
- 220: zweites optisches Erfassen des Objekts 2
- 240: Bestimmen der Oberflächeneigenschaften des Objekts 2
- 300: Zuordnen der bestimmten dreidimensionalen Geometrie des Objekts 2 und der bestimmten Oberflächeneigenschaften des Objekts 2
- 400: Erhalten wenigstens einer Anforderung an die zu generierenden synthetischen Daten
- 500: Generieren synthetischer Daten des Objekts 2 basierend auf den zugeordneten Daten
- 600: Erstellen verschiedener virtueller Szenen
- 700: Rendern von Bilddaten basierend auf den erstellten virtuellen Szenen
- 800: Annotieren der gerenderten Bilddaten
- 900: Trainieren eines Algorithmus des maschinellen Lernens mittels der gerenderten Bilddaten
- 950: Speichern des trainierten Algorithmus des maschinellen Lernens

## Patentansprüche

1. Verfahren zur Generierung synthetischer Daten von Objekten (2), vorzugsweise von Produkten (2), mit wenigstens den Schritten:
• Positionieren (000) eines Objekts (2),
• Projizieren (100) eines strukturierten Projektionsmusters, vorzugsweise einer Streifenprojektion, vorzugsweise mehrerer unterschiedlicher strukturierter Projektionsmuster, vorzugsweise Streifenprojektionen, nacheinander, auf das Objekt (2),
• vorzugsweise jeweils, erstes optisches Erfassen (120) des Objekts (2) samt strukturiertem Projektionsmuster,
• Bestimmen (140) der dreidimensionalen Geometrie des Objekts (2) basierend auf dem optisch erfassten strukturierten Projektionsmuster,
• bei unveränderter Anordnung des Objekts (2), zweites optisches Erfassen (220) des Objekts (2) aus derselben Perspektive wie beim ersten optischen Erfassen (120),
• Bestimmen (240) der Oberflächeneigenschaften des Objekts (2) basierend auf den optisch erfassten Bilddaten des zweiten optischen Erfassens (220),
• Zuordnen (300) der bestimmten dreidimensionalen Geometrie des Objekts (2) und der bestimmten Oberflächeneigenschaften des Objekts (2) und
• Generieren (500) synthetischer Daten des Objekts (2) basierend auf den zugeordneten Daten.

2. Verfahren nach Anspruch 1,
wobei das Projizieren (100) des strukturierten Projektionsmusters aus einem definierten Triangulationswinkel gegenüber dem ersten optischen Erfassen (120) des Objekts (2) erfolgt.

3. Verfahren nach Anspruch 1 oder 2,
wobei das zweite optische Erfassen (220) des Objekts (2) bei einem Ausleuchten (200) des Objekts (2), vorzugsweise aus wenigstens zwei unterschiedlichen Raumrichtungen und/oder mit mehreren unterschiedlichen Ausleuchtkonfigurationen nacheinander, erfolgt.

4. Verfahren nach einem der vorangehenden Ansprüche,
wobei das Bestimmen (240) der Oberflächeneigenschaften des Objekts (2) basierend auf einer bidirektionalen Reflektanzverteilungsfunktion erfolgt,
wobei die Parameter der bidirektionalen Reflektanzverteilungsfunktion vorzugsweise auf der bestimmten dreidimensionalen Geometrie des Objekts (2) beruhen.

5. Verfahren nach einem der vorangehenden Ansprüche,
mit dem weiteren Schritt nach dem Zuordnen (300) und vor dem Generieren (500):
• Erhalten (400) wenigstens einer Anforderung an die zu generierenden synthetischen Daten des Objekts (2) von einem Benutzer,
wobei die Anforderung wenigstens aufweist:
• eine zu lösende Aufgabe, vorzugsweise eine Anwesenheitsprüfung des Objekts (2), eine Lokalisation des Objekts (2) im 2D-Raum oder eine Detektion und Segmentierung des Objekts (2) oder eines Teilbereichs des Objekts (2), und/oder
• eine Angabe von Randparametern, vorzugsweise von Eigenschaften, vorzugsweise von Kamera- und Objektiveigenschaften, einer Bilderfassungseinheit (11) des optischen Erfassens (120, 220), vorzugsweise und/oder der Art einer Lichtquellen (12) eines Ausleuchten (200).

6. Verfahren nach einem der vorangehenden Ansprüche,
mit wenigstens dem weiteren Schritt:
• Erstellen (600) verschiedener virtueller Szenen, welche wenigstens die generierten synthetischen Daten des Objekts (2) erhalten,
wobei das Erstellen (600) verschiedener virtueller Szenen vorzugsweise unter Berücksichtigung einer Physik-Simulation erfolgt.

7. Verfahren nach Anspruch 6,
wobei das Erstellen (600) verschiedener virtueller Szenen ferner wenigstens ein weiteres erstelltes virtuelles Objekt, vorzugsweise in Umgebungs- und/oder Störobjekt, umfasst.

8. Verfahren nach Anspruch 6 oder 7,
wobei das Erstellen (600) verschiedener virtueller Szenen ferner wenigstens eine erstellte Lichtquelle, eine Bilderfassungsposition und/oder Störeinflüsse, vorzugsweise eine Tiefenschärfe, eine Verdeckung von Objekten und/oder Kamera- bzw. Objektiv-Eigenschaften, umfasst.

9. Verfahren nach einem der Ansprüche 6 bis 8,
mit wenigstens dem weiteren Schritt:
• Rendern (700) von Bilddaten basierend auf den erstellten virtuellen Szenen.

10. Verfahren nach Anspruch 9,
mit wenigstens dem weiteren Schritt:
• Annotieren (800) der gerenderten Bilddaten, vorzugsweise basierend auf der Anforderung.

11. Verfahren nach Anspruch 10,
mit wenigstens dem weiteren Schritt:
• Trainieren (900) eines Algorithmus des maschinellen Lernens mittels der gerenderten Bilddaten, vorzugsweise zur optischen Inspektion des Objekts (2).

12. Verfahren nach Anspruch 11,
mit wenigstens dem weiteren Schritt:
• Speichern (950) des trainierten Algorithmus des maschinellen Lernens.

13. Computerlesbare Daten, vorzugsweise computerlesbarer Algorithmus,
welche mittels eines Verfahrens nach einem der vorangehenden Ansprüche generiert, vorzugsweise trainiert, wurden.

14. Computerlesbarer Datenträger,
auf welchem die computerlesbaren Daten nach Anspruch 13 gespeichert sind.

15. Messvorrichtung (1), vorzugsweise Einmessstand (1), zur Generierung synthetischer Daten von Objekten (2), vorzugsweise von Produkten (2), mittels eines Verfahrens nach einem der Ansprüche 1 bis 13, mit
• einer Messfläche (14) zum Positionieren (000) eines Objekts (2),
• einer Projektionseinheit (13), vorzugsweise einer Streifenprojektionseinheit (13), zum Projizieren (100) eines strukturierten Projektionsmusters auf das Objekt (2),
• einer Bilderfassungseinheit (11) zum ersten optischen Erfassen (120) des Objekts (2) samt strukturierten Projektionsmuster und zum zweiten optischen Erfassen (220) des unverändert angeordneten Objekts (2) aus derselben Perspektive wie beim ersten optischen Erfassen (120) und
• einer Steuerungseinheit (15) zum Bestimmen (140) der dreidimensionalen Geometrie des Objekts (2) basierend auf dem optisch erfassten strukturierten Projektionsmuster, zum Bestimmen (240) der Oberflächeneigenschaften des Objekts (2) basierend auf den optisch erfassten Bilddaten, zum Zuordnen (300) der bestimmten dreidimensionalen Geometrie des Objekts (2) und der bestimmten Oberflächeneigenschaften des Objekts (2) sowie zum Generieren (500) synthetischer Daten des Objekts (2) basierend auf den zugeordneten Daten.
